# EUROPEAN PATENT SPECIFICATION

(11) **EP 2 825 057 B1**
(45) Date of publication and mention of the grant of the patent: **06.05.2020**
(21) Application number: 13726591.4
(22) Date of filing: 11.03.2013
(51) Int. Cl.: A23G 3/34, A23G 3/40, A23D 9/00, A23G 3/50

(54) **OXIDIXABLE FATTY ACID COMPOSITION DELIVERY FORM**
DARREICHUNGSFORM FÜR EINE OXIDIERBARE FETTSÄUREZUSAMMENSETZUNG
FORME D'ADMINISTRATION D'UNE COMPOSITION À BASE D'ACIDES GRAS OXYDABLES

(30) Priority: 12.03.2012 US 201261609628 P
(43) Date of publication of application: 21.01.2015
(73) Proprietor: AKER BIOMARINE ANTARCTIC AS, 0115 Vika, Oslo (NO)
(72) Inventor: SAEBO, Asgeir, N-6037 Eidsnes (NO)
(74) Representative: Carpmaels & Ransford LLP
(86) International application number: PCT/IB2013/000865
(87) International publication number: WO 2013/136183

(56) References cited:
- WO-A1-2009/050101
- US-A1- 2007 098 853
- DATABASE WPI Week 201075 Thomson Scientific, London, GB; AN 2010-M46643 XP002713298, & CN 101 822 651 A (DPA IND INC) 8 September 2010 (2010-09-08)
- DATABASE WPI Week 201230 Thomson Scientific, London, GB; AN 2012-B61687 XP002713311, & CN 102 311 868 A (LENSA INC) 11 January 2012 (2012-01-11)

## Description

### Field of the Invention

The present invention relates to oral delivery forms for oxidizable fatty acid compositions as defined in the claims.

### Background of the Invention

US 2007/0098853 concerns a stabilized emulsion employed to produce controlled release, discrete, solid particles or pellets which contain an encapsulated and/or embedded component, such as a readily oxidizable component, such as omega-3 fatty acids. CN101822651 concerns a chewable capsule and a method of making the same.

CN102311868 concerns a method for obtaining a krill oil composition without using an organic solvent.

WO 2009/050101 concerns encapsulated omega-3 fatty acids and/or omega-6 fatty acids and/or esters thereof with a coating comprising isoflavones.

The health effects of omega-3 fatty acids are well documented and numerous and health claims have been approved by the European (EFSA) and various national health authorities. The health claims focus on cardiovascular health, eye health, brain health and development of the human fetus and the growing child. The success of omega-3 as a food additive has had far less success than omega-3 supplements. The reason for this is the oxidative instability of the highly unsaturated omega-3 fatty acids and the related development of fishy off flavors.

In the omega-3 supplement business, products have successfully been provided as oils to be taken on a spoon or as soft gelatin capsules. Capsules have proven to protect the oil reasonably well for up to 3 years.

Microencapsulated oil has been reasonably successful as additive to some food items. Microencapsulation is a process by which an omega-3 core is packaged within a secondary material to form a microcapsule. Depending on the technology, the core is not necessarily a single small oil droplet, but rather a high number of micro droplets of oil trapped in the coating material. The entire particle can further be coated secondarily to ensure better flow ability and further enhanced stability. The technology is well developed targeted towards use as ingredient in various food items. The encapsulation materials have been selected from a long list of carbohydrates comprising but not limited to, various forms of starch, maltodextrins, glucose syrups, gum acacia, pectines, alginates, chitosan and various sugar derivatives. Proteins also have been proven, alone or in combination with carbohydrates, to function as matrices for microencapsulation and comprises whey proteins, soy proteins, gelatins, sodium caseinate and albumins. Lipids can also be on the encapsulation ingredient list, comprising vegetable fats and oils, hydrogenated fats, palm stearin, bees wax and polyethylene glycol.

Emulsion based technologies and spray drying are currently the most common approaches employed for microencapsulation of omega-3 fatty acids. Cyclodextrin complexation and liposomal preparations has also been developed.

Microencapsulated omega-3 has been added to a variety of foods like bread, milk, juice, yogurts, nutrient bars, and sweets.

However, microencapsulation techniques can be expensive and are limited in payload. What is needed in the art are alternative systems for delivering oxidizable fatty acids in a substantially non-oxidized form.

### Summary of the Invention

The present invention relates to oral delivery forms for oxidizable fatty acid compositions as defined in the claims.

The present invention provides a chewable oral delivery vehicle comprising a chewable matrix and at least one soft gelatin capsule encapsulating an oxidizable fatty acid composition, wherein the at least one soft gelatin capsule is incorporated into the chewable matrix, and wherein said soft gelatin capsule has a volume of from 0.10 ml to 0.50 ml. In some embodiments, the chewable matrix is a gummy candy or jelly sweet. In some embodiments, the oxidizable fatty acid composition is selected from the group consisting of free fatty acid compositions, fatty acid ester compositions, glyceride compositions, phospholipid compositions and combinations thereof, the free fatty acids, fatty acid esters, glycerides, and phospholipids comprising one or more fatty acids or residues thereof selected from the group consisting of eicosapentaenoic-, docosahexaenoic-, docosapentaenoic-, conjugated linoleic-, palmitoleic-, trans palmitoleic-, alpha linolenic-, gamma linolenic-, and stearidonic acid and combinations thereof.

In some embodiments, the oxidizable fatty acid composition further comprises a fat soluble vitamin selected from the group consisting of vitamin A, vitamin D, vitamin K1, vitamin K2, and combinations thereof. In some embodiments, the oxidizable fatty acid composition further comprises a viscosity modifier. In some embodiments, the oxidizable fatty acid composition further comprises a flavoring agent.

In some embodiments, the chewable matrix comprises one or more water soluble vitamins or functional supplement agents. The soft gelatin capsule has a volume of from 0.10 ml to 0.50 ml. In some embodiments, the soft gelatin capsule has a volume of from about 0.12 ml to about 0.4 ml. In some embodiments, the soft gelatin capsule has a volume of from about 0.15 ml to about 0.25 ml. In some embodiments, the soft gelatin capsule contains from 100 mg to 500 mg of the oxidizable fatty acid composition. In some embodiments, soft gelatin capsule contains from 120 mg to 400 mg of the oxidizable fatty acid composition. In some embodiments, the soft gelatin capsule contains from 150 mg to 250 mg of the oxidizable fatty acid composition.

In some embodiments, the oxidizable fatty acid composition is selected from the group consisting of a krill oil, fish oil, fish roe oil, or fish byproduct oil. In some embodiments, the krill oil comprises from about 35% to 60% phospholipids on a w/w basis; from about 20% to 45% triglycerides on a w/w basis; and from about 50 to about 2500 mg/kg astaxanthin. In some embodiments, the krill oil comprises from about 3% to 10% ether phospholipids on a w/w basis, so that the total amount of ether phospholipids and non-ether phospholipids in the composition is from about 48% to 60% on a w/w basis. In some embodiments, the krill oil comprises from about 25% to 30% omega-3 fatty acids as a percentage of total fatty acids and wherein from about 80% to 90% of the omega-3 fatty acids are attached to the phospholipids. In some embodiments, the krill oil comprises from about 100 to about 2500 mg/kg astaxanthin. In some embodiments, the krill oil comprises from about 1% to about 10% w/w ether phospholipids; from about 27% to 50% w/w non-ether phospholipids so that the amount of total phospholipids in the composition is from about 30% to 60% w/w; from about 20% to 50% w/w triglycerides; from about 100 to about 2500 mg/kg astaxanthin; and from about 20% to 35% omega-3 fatty acids as a percentage of total fatty acids in the composition, wherein from about 70% to 95% of the omega-3 fatty acids are attached to the phospholipids.

In some embodiments, the present invention provides for the oral delivery vehicles as defined in the claims for use in methods of providing an oxidizable fatty acid composition to a subject comprising orally administering the oral delivery vehicle defined in the claims to a subject.

### Detailed Description of Invention

Children, particularly toddlers, are not always happy with omega-3 oils provided on a spoon. Gelatin capsules that require swallowing are generally not an option due to choking concerns. To address these concerns, the present invention provides an oral delivery vehicle as defined in the claims in the form of a chewable matrix that provides a daily dosage of an oxidizable fatty acids composition, such as an omega-3 fatty acid composition, in a single or just a few of the oral delivery vehicles. In some preferred embodiments, the present invention provides for the incorporation of small softgel capsules into the core of gummy sweets. The softgel capsules have a volume of from 0.10 ml to 0.50 ml, preferably from about 0.12 ml to about 0.4 ml, and most preferably from about 0.15 ml to about 0.25 ml. The volume of the softgel capsule refers to the amount of the oxidizable fatty acid composition contained within the capsule. In preferred embodiments, the chewable matrix is a sweetened gel matrix. In preferred embodiments, the capsules are added to the chewable matrix during the production process. Depending on the size, more than one softgel capsules can be added to a single oral delivery vehicle. In some embodiments, the oxidizable fatty acid composition can further comprise a flavoring agent. In some embodiments, the oxidizable fatty acid composition can further comprise a viscosity modifier, for example, beeswax. In still further embodiments, the softgel capsule is preferably soft and designed for being chewable.

Preferred chewable matrices jelly candies and gelatin-based gummi candy. Exemplary gummi candies include gummi bears, gummi worms, gummi frogs, gummi hamburgers, gummi cherries, gummi soda bottles, gummi sharks, gummi army men, gummi hippopotami, gummi lobsters, gummi watermelons, gummi octopuses, gummi apples, gummi peaches, and gummi oranges. The terms "gummi" and "gummy" are used interchangeably herein.

It is contemplated that the chewable oral delivery vehicles of the present invention are not only inexpensive to manufacture, but that the enclosure of the softgel capsule by the chewable matrix material provides additional protection against oxidation. Polyunsaturated fatty acids are particularly vulnerable to oxidation and most of the microencapsulated products on the market do have limited stability and tends to develop off flavors. Accordingly, in one embodiment of this invention, omega-3 fatty acids will be protected inside the capsule such that off flavors do not develop and shorten the shelf life of the chewable oral delivery vehicle.

As described above, oxidizable fatty acid compositions are encapsulated into softgel capsules for later incorporation into a chewable matrix material. The term "softgel" capsule is used herein to refer to soft elastic capsules, and preferable to soft elastic capsules that are chewable. The softgel capsules may be formed from a variety of materials and are not limited to capsules formed from gelatin. A softgel capsule is a hermetically sealed, one-piece capsule with a liquid or semisolid fill. The softgel capsule comprises two major components, the gelatin shell and the fill. In the finished product, the gelatin shell is primarily composed of gelatin, plasticizer and water. The standard softgel shape of orally administered products is oval, oblong and round, though softgels can be manufactured in many shapes.

In some embodiments, the softgel capsules are chewable. Preferably, the softgel is made from a hydrophilic matrix comprising a gel-forming polymer and its oligomers or hydrolysates, in presence of a polymer modifier that can control the texture, viscosity, and melting point of the matrix. In some embodiments, the softgels may optionally comprise a sheath which comprises a polymer modifier, along with the gel-forming polymer composition, and plasticizer. Such a combination has the benefit of providing a stable composition where mass transfer between the shell and the matrix is reduced due to the structural similarity between the matrix and the shell.

As used herein, the terms "gel-forming polymer" and "gel-forming composition" refer to any natural or synthetic polymeric material or partial hydrolysate of a polymer that can form a gel when appropriately dissolved or dispersed in water or aqueous media. Examples of gel-forming compositions include proteins such as different types of gelatins from different sources. Specific examples are: acid and lime bone bovine gelatins; pig bone gelatin; skin pig gelatin; skin bovine gelatin; and fish gelatin. Other examples of gel-forming compositions are of polysaccharide nature. Specific examples are: sodium and calcium alginate; natural and modified starch and starch hydrolysates; pectins and amylopectins; and cellulose derivatives, such as hydroxypropyl-methyl cellulose, and carboxymethyl cellulose, and salts thereof. A gel-forming composition can be a hydrophilic polymer, alone or in combination with its building units, its oligomers, or hydrolysate.

As used herein, "polymer modifier" refers to a pharmaceutically acceptable compound that has the ability, under appropriate process conditions, to alter one or more physical and/or chemical properties of one or more of the gel-forming polymers disclosed herein or generally known for use in soft capsule formulations, so as to enhance the performance characteristics of the capsule formulation during processing and/or the performance characteristics and/or physical properties of the finished capsule product.

The polymer modifier of the present invention is included in the soft capsule of the present invention in order to alter one or more physical and/or chemical characteristics of the gel-forming polymers that are contained in the capsule formulations. As an example, the polymer modifier may reduce the melting point of the gel-forming polymer in the matrix formulation. With the melting point reduced, less heat is required to place the gel-forming polymer in a liquid state, thereby reducing the energy cost and time required to process the formulation and allowing the incorporation of heat-sensitive drugs or agents.

In addition to a possible reduction in the melting point of the gel-forming polymer, the polymer modifier may reduce the viscosity of one or more of the gel-forming compositions found in the capsule formulation, thereby providing a formulation that may flow more easily during processing (a "flowable" composition). Again, capsule manufacturing may be facilitated by such an alteration. Gel modifier can also prevent gel hardening upon gel storage and improve the disintegration and dissolution of the chewable products in the mouth.

A third illustrative example of the effect that the polymer modifier may have is a reduction of the molecular weight of one or more gel-forming polymers of the capsule formulation. Such a reduction also tends to affect other physical properties of the gel-forming polymers, both during capsule production and in the finished capsule product. The polymer modifier of the present invention also may enhance the texture or chewiness of the finished soft capsule. The capsule texture may tend to be less "leathery" than it would be in the absence of the polymer modifier, thereby providing a more acceptable mouth feel for the capsule user.

Soft gel capsules generally are produced by a rotary die process as set forth by J. P. Stanley in "The Theory and Practice of Industrial Pharmacy," L. Lachman, (editor), Lea and Febiger (publisher), Philadelphia (1976). In the process of the invention, a molten mass of a gel-forming polymer, such as, for example, a gelatin formulation, is fed from a reservoir onto drums to form two spaced sheets or ribbons of gelatin in a semi-molten state. These ribbons are fed around rollers and brought together at a convergent angle into the nip of a pair of roller dies that include opposed die cavities. A matrix containing an active ingredient to be encapsulated is fed into the wedge-shaped joinder of the ribbons.

The gelatin ribbons are continuously conveyed between the dies, with portions of the matrix being trapped between the sheets inside, the die cavities. The sheets are then pressed together, and severed around each die so that opposed edges of the sheets flow together to form a continuous gelatin sheath around the entrapped medicament. The part, of the gelatin sheet that is severed from the segments forming the capsules may then be collected for recycling. The very soft capsules are then dried to increase the integrity of the sheath, and packaged for later distribution and consumption.

The chewable softgels of the present invention are generally formed by combining the gel-forming composition, polymer modifier, plasticizer, and water with or without mixing, and while maintaining the heat of the mixture in a range between about 40 and about 75 degrees Celsius. This matrix mixture is then allowed to incubate for about 4 to about 72 hours, while its temperature is maintained in the range of about 40 to about 75 degrees Celsius. The matrix mixture is then cooled to a temperature in the range of about 30 to about 40 degrees Celsius.

The matrix mixture is then encapsulated. The capsules are then air-cooled to a temperature in the range of about 5 to about 25 degrees Celsius. The capsules are also dried to a final water content of a range of about 5 to about 20 percent by weight. Final water content can also be from about 5 to about 10 percent. Prior to drying, the matrix can comprise water from about 20% to about 50% by weight. Prior to drying, water content can also be about 25% to about 35% by weight. Active ingredients can be added from the start of preparing the gel mass, if they are chemically and physically stable. Unstable actives can be added, preferably as a last step before encapsulation to minimize any possibility for degradation. The performance properties of a gel-forming composition are affected in part by its cohesive strength, which, in the case of at least gelatin, is expressed as "bloom." This bloom value is determined by measuring the weight in grams required to move a plunger 0.5 inch in diameter, 4 mm into a 6.67% gelatin gel that has been held for 17 hours at 10C.

Chewable softgels are designed to at least partially disperse or dissolve in the user's mouth, upon chewing, within a brief period of time so that the chewable mass can be swallowed. Therefore, in addition to the above properties, the remains of the capsule should tend to be soluble after the active ingredient has been released. These remains should also have a good "mouth feel." As used herein, "mouth feel" describes chewability. Chewing the capsule remains should be a pleasant, or at least not an unpleasant, sensation that results in a swallowable composition.

In one embodiment, the matrix formulation, prior to drying, of the present invention includes the following ingredients in the specified percentages:

| Matrix Formulations | |
|---|---|
| INGREDIENT | % BY WEIGHT |
| Gel-Forming composition | 15-80 |
| Polymer modifier | 0.1-10 |
| Plasticizer | 5-40 |
| | |
| Water | 5-30 |
| Active Ingredient | 0.01-70 |
| Other Ingredients, e.g. flavors, sweeteners, and taste masking known in the industry | 0.01-15 |

The gel-forming polymer of the above embodiment may be a gelatin that exhibits a bloom in the range of about 0 to about 250. The plasticizer may be a polyol, such, for example, glycerol, sorbitol, maltitol, xylitol, or combinations thereof. The polymer modifier may be a mono, di, or poly carboxylic acid. More specifically, the polymer modifier may be lactic acid, fumaric acid, tartaric acid, citric acid, glycolic acid or a combination of two or more of these acids.

In this embodiment, the capsule may also include a sheath formulation (before drying) including the following ingredients in the specific ranges:

| Sheath Formulations | |
|---|---|
| INGREDIENT | % BY WEIGHT |
| Gel-Forming composition. | 25-55 |
| Plasticizer | 5-40 |
| Water | 15-40 |
| Other Ingredients, e.g., color, flavor, or sweetener. | 0.1-10 |

As with the matrix formulation, the gel-forming polymer may be a gelatin. The gelatin may exhibit a bloom in the range of about 80 to about 250. The plasticizer of this sheath formulation may be a polyol, such as, for example, a polyol selected from glycerol, sorbitol, maltitol, xylitol, or combinations thereof.

In another embodiment, the matrix formulation includes the following ingredients in the specified ranges, after drying:

| Matrix Formulations | |
|---|---|
| INGREDIENT | % BY WEIGHT |
| Gel-Forming composition | 30-70 |
| Polymer modifier | 0.25-5 |
| Plasticizer | 10-30 |
| Water | 5-15 |
| Active Ingredient | 1-25 |
| Other Ingredients | 0.1-5 |

Again, the matrix formulation may include a gelatin as the gel-forming polymer. In this instance, the gelatin may exhibit a bloom in the range of about 0 to about 80. Likewise, the plasticizer may be a polyol, such as one selected from the list set forth above. Also, the polymer modifier again may be a carboxylic acid, such as one selected from the list above.

In this embodiment, the capsule formulation also may include a sheath that includes the following ingredients in the specified ranges:

| Sheath Formulations, After Drying | |
|---|---|
| INGREDIENT | % BY WEIGHT |
| Gel-Forming composition | 10-70 |
| Plasticizer | 10-30 |
| Water | 5-15 |
| Other Ingredients | 0.1-10 |

The gel-forming polymer of this sheath formulation may be a gelatin, which exhibits a bloom in the range of about 100 to about 175.

It will be understood that different percentages may be selected within the above ranges so that the sum of the percentages of the sheath ingredients is equal to 100%. If additional ingredients are used, the percentages will be adjusted within the ranges listed to accommodate the additional ingredients.

In the case of a capsule formulation including both a matrix and a sheath, the matrix may include a first gel-forming polymer and a first plasticizer and the sheath may include a second gel-forming polymer and a second plasticizer. Depending upon the specific formulation, the first and second gel-forming polymers may be either identical to each other or differ in their chemical compositions, bloom values and/or amounts. Likewise, the first and second plasticizers may be identical or differ in their compositions and/or amounts.

The softgel capsules of the present invention as defined in the claims are filled with an oxidizable fatty acid composition. The oxidizable fatty acid composition may comprise free fatty acids, fatty acid esters comprising fatty acid moieties (such as ethylesters), glycerides comprising fatty acid moieties such as mono-, di-, or triglycerides, phospholipids comprising fatty acid moieties (including lysophospholipids), and combinations thereof. The term fatty acid moiety is used to refer to an acyl chain corresponding to a fatty acid that is covalently attached to another acyl chain (e.g., an ethyl group in an ethyl ester), a glycerol backbone (e.g., a di- or triglyceride) or a phosphoglyceride backbone (e.g., a phospholipid or lysophospholipid). The present invention is not limited to any particular fatty acids or fatty acid moieties provided in the form of esters, glycerides, or phospholipids. Suitable fatty acids and fatty acid moieties include, but are not limited to, eicosapentaenoic-, docosahexaenoic-, docosapentaenoic-, conjugated linoleic-, palmitoleic-, trans palmitoleic-, alpha linolenic-, gamma linolenic-, and stearidonic acid and combinations thereof.

In preferred embodiments, the softgel capsules are filled with omega-3 phospholipid compositions. The omega-3 phospholipids may be naturally occurring, such as those obtained from krill (i.e., krill oil) or synthetic, such as those made by an enzymatic process. Suitable processes for synthetic omega-3 phospholipids are described in WO06/054183, WO02090560, WO05/037848, and WO05/038037. Suitable processes for producing krill oil include extraction with polar solvents such as ethanol, supercritical fluid extraction, extraction with non-polar organic solvents such as acetone, cold pressing, etc. See, e.g., WO2009/027692, WO2008/117062, WO2003/011873. In some embodiments, krill oil is extracted from the denatured krill meal. In some embodiments, the krill oil is extracted by contacting the krill meal with ethanol. In some embodiments, krill is then extracted with a ketone solvent such as acetone. In other embodiments, the krill oil is extracted by one or two step supercritical fluid extraction.

In some embodiments, the present invention utilizes an omega-3 phospholipid composition, preferably a krill oil composition, marine phospholipids form fish roe, fish or fish by-products, or synthetic omega-3 phospholipid, and more preferably a Euphausia superba krill oil composition, comprising from about 40% to about 60% w/w phospholipids, preferably from about 45% to 55% w/w phospholipids. In some embodiments, the composition comprise from about 50 mg/kg astaxanthin to about 2500 mg/kg astaxanthin, preferably from about 1000 to about 2200 mg/kg astaxanthin, more preferably from about 1500 to about 2200 mg/kg astaxanthin. In some preferred embodiments, the compositions comprise greater than about 1000, 1500, 1800, 1900, 2000, or 2100 mg/kg astaxanthin. In some preferred embodiments, the omega-3 phospholipid compositions of the present invention comprise from about 1%, 2%, 3% or 4% to about 8%, 10%, 12% or 15% w/w ether phospholipids or greater than about 4%, 5%, 6%, 7%, 8%, 9% or 10% ether phospholipids. In some embodiments the ether phospholipids are preferably alkylacylphosphatidylcholine, lyso-alkylacylphosphatidylcholine, alkylacylphosphatidyl-ethanolamine or combinations thereof. In some embodiments, the omega-3 phospholipid compositions comprise from about 1%, 2%, 3% or 4% to about 8%, 10%, 12% or 15% w/w ether phospholipids and from about 30%, 33%, 40%, 42%, 45%, 48%, 50%, 52%, 54%, 55% 56%, 58% to about 60% non-ether phospholipids so that the total amount of phospholipids (both ether and non-ether phospholipids) ranges from about 40% to about 60%. One of skill in the art will recognize that the range of 40% to 60% total phospholipids, as well as the other ranges of ether and non-ether phospholipids, can include other values not specifically listed within the range.

In further embodiments, the compositions comprise from about 20% to 45% w/w triglycerides; and from about 50 to about 2500 mg/kg astaxanthin. In some embodiments, the compositions comprise from about 20% to 35%, preferably from about 25% to 35%, omega-3 fatty acids as a percentage of total fatty acids in the composition, wherein from about 70% to 95%, or preferably from about 80% to 90% of the omega-3 fatty acids are attached to the phospholipids. In some embodiments, the present invention provides encapsulated Euphausia superba krill oil compositions.

The present invention is not limited to the presence of any particular omega-3 fatty acid residues in the omega-3 phospholipid composition. In some preferred embodiments, the omega-3 phospholipid comprises EPA and DHA residues. In some embodiments, the omega-3 phospholipid compositions comprise less than about 5%, 4%, 3% or preferably 2% free fatty acids on a weight/weight (w/w) basis. In some embodiments, the omega-3 phospholipid compositions comprise less than about 25%, 20%, 15%, 10% or 5% triglycerides (w/w). In some embodiments, the krill oil compositions comprise greater than about 30%, 40%, 45%, 50%, 55%, 60%, or 65% phosphatidyl choline (w/w). In some embodiments, the omega-3 phospholipid compositions comprise greater than about 100, 200, 300, 400, or 500 mg/kg astaxanthin esters and up to about 700 mg/kg astaxanthin esters. In some embodiments, the present invention provides omega-3 phospholipid compositions comprising at least 500, 1000, 1500, 2000, 2100, or 2200 mg/kg astaxanthin esters and at least 36% (w/w) omega-3 fatty acids. In some embodiments, the krill oil compositions of the present invention comprise less than about 1.0g/100g, 0.5g/100g, 0.2g/100g or 0.1g/100g total cholesterol.

The oxidizable fatty acid composition may also contain optional ingredients including, for example, herbs, vitamins, minerals, enhancers, colorants, sweeteners, flavorants, inert ingredients, and the like, particularly those that are fat soluble. For example, the chewable oral delivery vehicle of the present invention may contain one or more of the following: ascorbates (ascorbic acid, mineral ascorbate salts, rose hips, acerola, and the like), dehydroepiandosterone (DHEA), Fo-Ti or Ho Shu Wu (herb common to traditional Asian treatments), Cat's Claw (ancient herbal ingredient), green tea (polyphenols), inositol, kelp, dulse, bioflavinoids, maltodextrin, nettles, niacin, niacinamide, rosemary, selenium, silica (silicon dioxide, silica gel, horsetail, shavegrass, and the like), spirulina, zinc, and the like. Such optional ingredients may be either naturally occurring or concentrated forms.

In still other embodiments, the oxidizable fatty acid compositions comprise at least one vitamin (e.g., vitamin A, thiamin (B1), riboflavin (B2), pyridoxine (B6), cyanocobalamin (B12), biotin, ascorbic acid (vitamin C), retinoic acid (vitamin D), vitamin E, folic acid and other folates, vitamin K, vitamine K2, niacin, and pantothenic acid). In some embodiments, the particles comprise at least one mineral (e.g., sodium, potassium, magnesium, calcium, phosphorus, chlorine, iron, zinc, manganese, flourine, copper, molybdenum, chromium, selenium, and iodine). In some particularly preferred embodiments, a dosage of a plurality of particles includes vitamins or minerals in the range of the recommended daily allowance (RDA) as specified by the United States Department of Agriculture. In still other embodiments, the particles comprise an amino acid supplement formula in which at least one amino acid is included (e.g., 1-carnitine or tryptophan).

In further embodiments, the oxidizable fatty acid compositions comprise at least one food flavoring such as acetaldehyde (ethanal), acetoin (acetyl methylcarbinol), anethole (parapropenyl anisole), benzaldehyde (benzoic aldehyde), N butyric acid (butanoic acid), d or 1 carvone (carvol), cinnamaldehyde (cinnamic aldehyde), citral (2,6 dimethyloctadien 2,6 al 8, gera nial, neral), decanal (N decylaldehyde, capraldehyde, capric aldehyde, caprinaldehyde, aldehyde C 10), ethyl acetate, ethyl butyrate, 3 methyl 3 phenyl glycidic acid ethyl ester (ethyl methyl phenyl glycidate, strawberry aldehyde, C 16 aldehyde), ethyl vanillin, geraniol (3,7 dimethyl 2,6 and 3,6 octadien 1 ol), geranyl acetate (geraniol acetate), limonene (d, l, and dl), linalool (linalol, 3,7 dimethyl 1,6 octadien 3 ol), linalyl acetate (bergamol), methyl anthranilate (methyl 2 aminobenzoate), piperonal (3,4 methylenedioxy benzaldehyde, heliotropin), vanillin, alfalfa (Medicago sativa L.), allspice (Pimenta officinalis), ambrette seed (Hibiscus abelmoschus), angelic (Angelica archangelica), Angostura (Galipea officinalis), anise (Pimpinella anisum), star anise (Illicium verum), balm (Melissa officinalis), basil (Ocimum basilicum), bay (Laurus nobilis), calendula (Calendula officinalis), (Anthemis nobilis), capsicum (Capsicum frutescens), caraway (Carum carvi), cardamom (Elettaria cardamomum), cassia, (Cinnamomum cassia), cayenne pepper (Capsicum frutescens), Celery seed (Apium graveolens), chervil (Anthriscus cerefolium), chives (Allium schoenoprasum), coriander (Coriandrum sativum), cumin (Cuminum cyminum), elder flowers (Sambucus canadensis), fennel (Foeniculum vulgare), fenugreek (Trigonella foenum graecum), ginger (Zingiber officinale), horehound (Marrubium vulgare), horseradish (Armoracia lapathifolia), hyssop (Hyssopus officinalis), lavender (Lavandula officinalis), mace (Myristica fragrans), marjoram (Majorana hortensis), mustard (Brassica nigra, Brassica juncea, Brassica hirta), nutmeg (Myristica fragrans), paprika (Capsicum annuum), black pepper (Piper nigrum), peppermint (Mentha piperita), poppy seed (Papayer somniferum), rosemary (Rosmarinus officinalis), saffron (Crocus sativus), sage (Salvia officinalis), savory (Satureia hortensis, Satureia montana), sesame (Sesamum indicum), spearmint (Mentha spicata), tarragon (Artemisia dracunculus), thyme (Thymus vulgaris, Thymus serpyllum), turmeric (Curcuma longa), vanilla (Vanilla planifolia), zedoary (Curcuma zedoaria), sucrose, glucose, saccharin, sorbitol, mannitol, aspartame. Other suitable flavoring are disclosed in such references as Remington's Pharmaceutical Sciences, 18th Edition, Mack Publishing, p. 1288-1300 (1990), and Furia and Pellanca, Fenaroli's Handbook of Flavor Ingredients, The Chemical Rubber Company, Cleveland, Ohio, (1971), known to those skilled in the art.

In other embodiments, the oxidizable fatty acid compositions comprise at least one synthetic or natural food coloring (e.g., annatto extract, astaxanthin, beet powder, ultramarine blue, canthaxanthin, caramel, carotenal, beta carotene, carmine, toasted cottonseed flour, ferrous gluconate, ferrous lactate, grape color extract, grape skin extract, iron oxide, fruit juice, vegetable juice, dried algae meal, tagetes meal, carrot oil, corn endosperm oil, paprika, paprika oleoresin, riboflavin, saffron, tumeric, tumeric and oleoresin).

In still further embodiments, the oxidizable fatty acid compositions comprise at least one phytonutrient (e.g., soy isoflavonoids, oligomeric proanthcyanidins, indol 3 carbinol, sulforaphone, fibrous ligands, plant phytosterols, ferulic acid, anthocyanocides, triterpenes, omega 3/6 fatty acids, conjugated fatty acids such as conjugated linoleic acid and conjugated linolenic acid, polyacetylene, quinones, terpenes, cathechins, gallates, and quercitin). Sources of plant phytonutrients include, but are not limited to, soy lecithin, soy isoflavones, brown rice germ, royal jelly, bee propolis, acerola berry juice powder, Japanese green tea, grape seed extract, grape skin extract, carrot juice, bilberry, flaxseed meal, bee pollen, ginkgo biloba, primrose (evening primrose oil), red clover, burdock root, dandelion, parsley, rose hips, milk thistle, ginger, Siberian ginseng, rosemary, curcumin, garlic, lycopene, grapefruit seed extract, spinach, and broccoli.

As described above, the softgel capsules are incorporated into a surrounding chewable matrix, as defined in the claims. In some particularly preferred embodiments, the chewable matrix material is a sweetened material commonly referred to a gummy candy or jelly material. Gummy candy or jelly sweets are a broad general type of gelatin based, chewy candy. Gummy bears are the most popular and well known of the gummy candies. Other shapes are provided as well and gummy candies are sometimes combined with other forms of candy such as marshmallows and chocolates and as well made sour. Gummy candies have been formulated with omega-3 in the form of microencapsulated powder, but these formulation have limited shelf life due to oxidation and the amount of omega-3 incorporated is extremely small. The present invention solves both of these problems.

In preferred embodiments, the chewable matrix material comprises a gelling agent, which may be any physiologically tolerable gelling agent (preferably a saccharide (e.g. an oligosaccharide or polysaccharide), a protein or a glycoprotein) or combination capable of forming a soft, chewable, self-supporting chewable gel. Many such materials are known from the food and pharmaceutical industry and are discussed for example in Handbook of hydrocolloids, G O Phillips and P A Williams (Eds.), Woodhead Publishing, Cambridge, UK, 2000. The gelling agents are preferably materials capable of undergoing a sol-gel transformation, e.g. under the influence of a change in physiochemical parameters such as temperature, pH, presence of metal ions (e.g. group 1 or 2 metal ions), etc. Preferred gelling agents include gelatins, alginates and carageenans. However, the use of gelatins is especially preferred as breakdown in the throat of trapped fragments is ensured and as cores having the desired properties may readily be produced using gelatins.

The gelatins used as gelling agents in the chewable matrix of the invention may be produced from the collagen of any mammal or the collagen of any aquatic species, however the use of gelatin from salt-water fish and in particular cold and warm water fishes is preferred. Gelatins having an amino acid content of 5 to 25% wt. are preferred, more especially those having an amino acid content of 10 to 25% wt. The gelatins will typically have a weight average molecular weight in the range 10 to 250 kDa, preferably 75 to 220 kDa, especially 80 to 200 kDa. Gelatins having no Bloom value or low Bloom values of 60-300, especially 90-200 are preferred. Where a gelatin of no Bloom value, e.g. a cold water fish gelatin, is used, this will typically be used together with another gelatin or other gelling agent. The combination of cold water and warm water fish gelatins is especially preferred. The gelatin will typically be present in the aqueous phase at a concentration of 1 to 50% wt., preferably 2 to 35% wt., particularly 5 to 25% wt. In the case of mixtures of gelatin and polysaccharides, the weight ratio of gelatin to polysaccharide in the aqueous phase will typically be 50:1 to 5:1, preferably 40:1 to 9:1, especially 20:1 to 10:1.

Where polysaccharides, or mixtures of polysaccharides and gelatin are used as the gelling agent, it is preferred to use natural polysaccharides, synthetic polysaccharides or semisynthetic polysaccharides, e.g. polysaccharides from plants, fish, terrestrial mammals, algae, bacteria and derivatives and fragmentation products thereof. Typical marine polysaccharides include carageenans, alginates, agars and chitosans.

Typical plant polysaccharides include pectins. Typical microorganism polysaccharides include gellans and scleroglucans. The use of charged, e.g. electrostatically charged and/or sulphated polysaccharides is preferred, as is the use of marine polysaccharides, in particular carageenans, and alginates, especially carageenans. The carageenan family, which includes iota- and kappa-carageenans, is a family of linear sulphated polysaccharides produced from red algae. The repeating disaccharide unit in kappa-carrageenan is β-D-galactose-4-sulphate and 3,6-anhydro-α-D-galactose, while that in iota-carrageenan is β-D-galactose-4-sulphate and 3,6-anhydro-α-D-galactose-2-sulphate. Both kappa- and iota-carageenans are used in food preparations. The carageenans are used as stabilisers, emulsifiers, gelling agents and fat replacers.

Both iota and kappa carageenans form salt- or cold-setting reversible gels in an aqueous environment. Coil-helix transition and aggregation of helices form the gel network. Kappa-carrageenan has binding sites for specific monovalent cations, resulting in gel formation with decreasing shear and elastic moduli in the order Cs⁺>K⁺>>Na⁺>Li⁺. As a rule, an increasing salt concentration enhances the elastic modulus and the setting and melting temperatures of a kappa-carrageenan gel. The use of water-soluble potassium, rubidium, or caesium compounds, particularly potassium compounds, and particularly naturally occurring compounds (e.g. salts) is preferred when kappa-carrageenan is used according to the invention, e.g. at concentrations of up to 100 mM, more especially up to 50 mM. A salt-dependent conformational transition is also found for iota-carrageenan. The molecules are also known to undergo coil-helix transition with strong helix-stabilisation in the presence of multivalent cations, like Ca²⁺. The use of water-soluble calcium, strontium, barium, iron or aluminium compounds, especially calcium compounds, and particularly naturally occurring compounds (e.g. salts) is preferred when iota-carrageenan is used according to the invention, e.g. at concentrations of up to 100 mM.

The polysaccharide gelling agents used according to the invention will typically have weight average molecular weights of 5 kDa to 2 MDa, preferably 10 kDa to 1 MDa, most preferably 100 kDa to 900 kDa, particularly 200 to 800 kDa. They will typically be used at concentrations of 0.01 to 5% wt, preferably 0.1 to 1.5% wt., particularly 0.2 to 1% wt in the aqueous phase. Where mono or multivalent cations, typically group 1 or group 2 metal ions, are included in the aqueous phase, this will typically be at concentrations in the range 2.5 to 100 mM, particularly 5 to 50 mM.

Besides the gelling agent and water and any required gelling initiator, other physiologically tolerable materials may be present in the chewable matrix, e.g. emulsifiers, emulsion stabilizers, pH modifiers, viscosity modifiers, sweeteners, fillers, vitamins (e.g. vitamin C, thiamine, riboflavin, niacin, vitamin B6, vitamin B12, folacin, panthotenic acid), minerals, aromas, flavours, colours, physiologically active agents, etc., as described above in detail in relation to addition materials that can be included in the oxidizable fatty acid composition.

The chewable matrix preferably has a gelling temperature in the range 10 to 30C, more preferably 15 to 28 C., and a melting temperature in the range 20 to 80C, more preferably 24 to 60C, especially 28 to 50C.

Where a sweetener is included in the chewable matrix, this will typically be selected from natural sweeteners such as sucrose, fructose, glucose, reduced glucose, maltose, xylitol, maltitol, sorbitol, mannitol, lactitol, isomalt, erythritol, polyglycitol, polyglucitol and glycerol and artificial sweeteners such as aspartame, acesulfame-K, neotame, saccharine, sucralose. The use of non-cariogenic sweeteners is preferred and the use of xylitol is especially preferred.

Mass production of gummi confection (e.g., gummi bears) includes mixing the gummi confection ingredients and pouring the resulting mixture into many starched-lined (e.g., corn starch-lined) trays/molds. The corn starch prevents the gummy bears from sticking to the mold and lets them release easily once they are set. First, the desired character molds are created and, if necessary, duplicated with a machine. Optionally, starch powder is applied to the character molds. Gummi confection ingredients, such as sugar, glucose syrup, gelatin, and water are mixed together and heated. In one aspect, the ingredients are mixed with colors and flavors that give the bears their signature look and taste. The molten gelatin mixture is poured into the molds and allowed to cool and set prior to packaging or consumption. Preferably, the gummi confection is subsequently heated and placed in a large drum tumbler to apply a composition of isolated Bacillus coagulans and a sweetener (e.g., a sugar).

In some preferred embodiments, production of gummi confection includes the following. A colloid batch and a puree batch are formed and combined with corn syrup and sugar to form a base slurry. The colloid batch comprises a solution of the gelling agent in water at a level of from 5 to 15% by weight of the gelling agent, more preferably from 7 to 12% of the gelling agent based on the total weight of the colloid batch. The colloid batch is held at a temperature of 77 to 88 °C (170 to 190 F). The puree batch preferably comprises water, fruit puree and/or high fructose corn syrup or other sweeteners, thin boiling starch, and sodium citrate. It is held at a temperature of from 18 to 24 °C (65 to 75F). Preferably, the fruit puree has a Brix of from 10 to 45, more preferably from 25 to 40. Optionally, the puree batch includes a plurality of fruit purees. The fruit puree comprises a typical fruit puree, a fruit juice, or a fruit powder. The puree batch comprises from 30 to 40% by weight water, from 0 to 40% by weight fruit puree, from 0 to 40% by weight high fructose corn syrup, from 25 to 35% by weight thin boiling starch, and from 0.0 to 2.0% by weight sodium citrate. In a mixing kettle from 25 to 40% by weight of additional corn syrup is combined with from 15 to 40% by weight of fine granulated sugar, from 10 to 15% by weight of the colloid batch and from 20 to 30% by weight of the puree batch to form the base slurry. Preferably, the corn syrup is approximately 42 DE corn syrup, however, as would be understood by one of ordinary skill in the art other DE corn syrups could be used. The base slurry components are completely mixed and held at 54 to 66 °C (130 to 150F). in a holding tank.

The base slurry is then cooked to bring the Brix to from 70 to 85 Brix, more preferably to a Brix of from 75 to 80. In one embodiment the base slurry is passed through a coil cooker and heated to a temperature of from 121 to 163 °C (250 to 325F) to cook it. Other cooking methods could be used as will be understood by one of ordinary skill in the art. The cooked base slurry is preferably subjected to vacuum to further increase the Brix into the desired range. The cooked base slurry is held at approximately 200 F until used. An acidulant solution is preferably added along with color and flavor to the cooked base slurry just prior to deposition in the starch molds. In one aspect, the acidulant solution comprises ascorbic acid present in an amount of from 15 to 20% by weight, citric acid present in an amount of from 10 to 20% by weight, and malic acid present in an amount of from 5 to 10% by weight with the remainder comprising water. As would be understood by one of ordinary skill in the art, other edible acids could be used in place of or in addition to those listed. In one aspect, 95 to 97% by weight of cooked base slurry is combined with from 2 to 3% by weight of the acidulant solution and the remainder comprises flavors and colors. Optionally, the acidulant solution is used to bring the pH of the base slurry to from 2.6 to 3.2. One of ordinary skill in the art would have no difficulty selecting suitable colors and flavors. The combined mixture is then deposited into starch molds, e.g., using a Mogul starch molding machine. Such starch molding machines are well known by those of ordinary skill in the art. In one aspect, from 0.3 to 3 grams of the base slurry is deposited into each mold cavity. In some preferred embodiments, the starch molding machine ("Mogul") used to form the gummy bears comprises two nozzles for each mold, and a device for delivery of small softgel capsules. The first nozzle provides about 40% of the volume of the mold before one capsule is placed in the mold. Finally, the second nozzle fills up the mold. The gummy bear containing the capsule is then quickly cooled. The starch trays with deposited base slurry are transferred to a drying room where there are held for 12 to 48 hours. Optionally, the trays are first held at a temperature of from 54 to 66 °C (130 to 150F) for from 10 to 15 hours, and then cooled to 21 to 27 °C (70 to 80F) and held at that temperature for from 6 to 12 hours. The gelled starch molded food pieces are then removed from the trays, the starch is recycled.

In some embodiments of the invention, it is contemplated that oil inside the capsule is protected from hydrolysis by water present in the product. Gummy candies and other jelly sweets contain rather high amounts of water and further, the acidity is low to counteract growth of bacteria.

In still another embodiment of the invention, omega-3 either in phospholipid or triglyceride form contained in the capsule are protected from interaction with other ingredients in the gummy sweets that potentially could accelerate the breakdown of omega-3. For instance, it is well known that the antioxidant tocopherol above a certain low limit becomes a pro-oxidant to omega-3 fatty acids. It is not advisable to combine high levels of omega-3 with high levels of tocopherols. This problem is solved by the present invention. The gummy sweet recipe might comprise high levels of tocopherols which would not interfere with the omega-3 contained in the mini capsule.

In still another embodiment of the invention, fat soluble functional lipids can be combined with water soluble functional supplement items. There is no danger of incompatibility of the materials used for production of the gummy sweet or water soluble functional ingredients added and the oil inside the softgel capsule.

The invention provides high dosage forms of omega-3 in the form of chewable sweets and can be used as a food supplement.

### EXAMPLES

### Example 1

Omega-3 fatty acids mainly in the form of phospholipids were incorporated in a gummy bear blend. The gummy bears contained 3.83% by weight of phospholipids. The content of Phosphatidylcholine and Lyso-phosphatidylcholine was 3.19% and 0.33% by weight respectively. The product was stored at 25, 30 and 40 C respectively for 1 month and then reanalyzed. The content of Phosphatidylcholine measured by phosphorus-NMR (P-NMR) was reduced and the content of lyso-Phosphatidylcholine was enhanced substantially as shown in Table 1.

**Table 1. Content of Phosphatidylcholine (PC) and Lyso-Phosphatidylcholine (LPC) in gummy bears at the time of production and after 1 month stored at various temperatures.**

| temp C | PC | LPC |
|---|---|---|
| before | 3,19 | 0,33 |
| 25 | 2,51 | 0,57 |
| 30 | 2,45 | 0,64 |
| 40 | 1,91 | 0,80 |

### Example 2

Spherical chewable soft gelatin capsules are produced containing on average 0.15 ml of krill oil. The capsule shell material comprises water, gelatin, a plasticizer and hydrogenated starch hydrolysate. The krill oil comprises about 50% by weight of phospholipids, mainly phosphatidylcholine, and about 45% by weight of triglycerides. A tutti frutti flavor amounting to 1.0 % by weight is added to the oil. The viscosity of the oil at 35C is about 500 mPas.

A standard gummy bear recipe blend comprising corn starch, corn syrup, sugar, gelatin, bees wax as well as a color agent and flavor is made. The flavor is a tutti frutti type. The starch molding machine ("Mogul") used to form the gummy bears contains two nozzles for each mold, and a device for delivery of small soft gelatin capsules. The first nozzle provides about 40% of the volume of the mold before one capsule is placed in the mold. Finally, the second nozzle fills up the mold. The gummy bear containing the capsule is then quickly cooled. The gummy bear produced provides each 150 mg of krill oil and 30 mg EPA+DHA mainly in the form of phosphatidylcholine.

### Example 3

Spherical chewable soft gelatin capsules are produced containing on average 0.15 ml of omega-3 concentrate in triglyceride form. The capsule shell material comprises water, gelatin, a plasticizer and hydrogenated starch hydrolysate. The omega-3 concentrate comprises 600 mg EPA+DHA for each gram of oil. Beeswax is added to the oil to obtain a viscosity of about 500 mPas at 35 C. Further a citrus flavor amounting to 1.0% of the oil is added. The gummy bears are produced as described in example 2, except for the added flavor now being a citrus type. Each gummy bear provides 90 mg EPA+ DHA.

## Claims

1. A chewable oral delivery vehicle comprising a chewable matrix and at least one soft gelatin capsule encapsulating an oxidizable fatty acid composition, wherein said at least one soft gelatin capsule is incorporated into said chewable matrix, and wherein said soft gelatin capsule has a volume of from 0.10 ml to 0.50 ml.

2. A chewable oral delivery vehicle according to claim 1, wherein said chewable matrix is a sweetened gel matrix such as a gummy candy or jelly sweet.

3. A chewable oral delivery vehicle according to claim 1 or 2, wherein more than one soft gelatin capsule is incorporated into said chewable matrix.

4. A chewable oral delivery vehicle according to claim 1, wherein oxidizable fatty acid composition is selected from the group consisting of free fatty acid compositions, fatty acid ester compositions, glyceride compositions, phospholipid compositions and combinations thereof, said free fatty acids, fatty acid esters, glycerides, and phospholipids comprising one or more fatty acids or residues thereof selected from the group consisting of eicosapentaenoic-, docosahexaenoic-, docosapentaenoic-, conjugated linoleic-, palmitoleic-, trans palmitoleic-, alpha linolenic-, gamma linolenic-, and stearidonic acid and combinations thereof.

5. A chewable oral delivery vehicle according to any of Claims 1 to 4, wherein said oxidizable fatty acid composition further comprises a fat soluble vitamin selected from the group consisting of vitamin A, vitamin D, vitamin K1, vitamin K2, and combinations thereof.

6. A chewable oral delivery vehicle according to any of Claims 1 to 5, wherein said oxidizable fatty acid composition further comprises a viscosity modifier and/or a flavoring agent.

7. A chewable oral delivery vehicle according to any of Claims 1 to 6, wherein said chewable matrix comprises one or more water soluble vitamins or functional supplement agents.

8. A chewable oral delivery vehicle according to any of Claims 1 to 7, wherein said soft gelatin capsule has a volume of from 0.12 ml to 0.4 ml; or wherein said soft gelatin capsule has a volume of from 0.15 ml to 0.25 ml.

9. A chewable oral delivery vehicle according to any of Claims 1 to 8, wherein said soft gelatin capsule contains from 100 mg to 500 mg of said oxidizable fatty acid composition; for example, wherein said soft gelatin capsule contains from 120 mg to 400 mg of said oxidizable fatty acid composition; or wherein said soft gelatin capsule contains from 150 mg to 250 mg of said oxidizable fatty acid composition.

10. A chewable oral delivery vehicle of any of Claims 1 to 9, wherein said oxidizable fatty acid composition is selected from the group consisting of a krill oil, fish oil, fish roe oil, or fish byproduct oil.

11. A chewable oral delivery vehicle of Claim 10, wherein said krill oil comprises from 35% to 60% phospholipids on a w/w basis; from 20% to 45% triglycerides on a w/w basis; and from 50 to 2500 mg/kg astaxanthin.

12. A chewable oral delivery vehicle of Claim 11, wherein said krill oil comprises from 3% to 10% ether phospholipids on a w/w basis, so that the total amount of ether phospholipids and non-ether phospholipids in the composition is from 48% to 60% on a w/w basis.

13. A chewable oral delivery vehicle of Claim 11, wherein said krill oil comprises from 25% to 30% omega-3 fatty acids as a percentage of total fatty acids and wherein from 80% to 90% of said omega-3 fatty acids are attached to said phospholipids.

14. A chewable oral delivery vehicle of any of Claims 11 to 13, wherein said krill oil comprises from 100 to 2500 mg/kg astaxanthin.

15. A chewable oral delivery vehicle of any of Claims 11 to 14, wherein said krill oil comprises from 1% to 10% w/w ether phospholipids; from 27% to 50% w/w non-ether phospholipids so that the amount of total phospholipids in the composition is from 30% to 60% w/w; from 20% to 50% w/w triglycerides; from 100 to 2500 mg/kg astaxanthin; and from 20% to 35% omega-3 fatty acids as a percentage of total fatty acids in said composition, wherein from 70% to 95% of said omega-3 fatty acids are attached to said phospholipids.

16. A chewable oral delivery vehicle of any of Claims 1 to 15 for use as a medicament in a therapeutical method of providing an oxidizable fatty acid composition to a subject comprising orally administering the oral delivery vehicle of any one of claims 1 to 15 to a subject.

## Patentansprüche

1. Kaubarer oraler Abgabeträger, umfassend eine kaubare Matrix und wenigstens eine Weichgelatinekapsel, die eine oxidierbare Fettsäurezusammensetzung verkapselt, wobei die wenigstens eine Weichgelatinekapsel in die kaubare Matrix einverleibt ist und wobei die Weichgelatinekapsel ein Volumen von 0,10 ml bis 0,50 ml aufweist.

2. Kaubarer oraler Abgabeträger gemäß Anspruch 1, wobei die kaubare Matrix eine gesüßte Gelmatrix, wie z. B. ein Gummibonbon oder eine Geleesüßigkeit ist.

3. Kaubarer oraler Abgabeträger gemäß Anspruch 1 oder 2, wobei mehr als eine Weichgelatinekapsel in die kaubare Matrix einverleibt ist.

4. Kaubarer oraler Abgabeträger gemäß Anspruch 1, wobei die oxidierbare Fettsäurezusammensetzung ausgewählt ist aus der Gruppe bestehend aus Freie-Fettsäure-Zusammensetzungen, Fettsäureesterzusammensetzungen, Glyceridzusammensetzungen, Phospholipidzusammensetzungen und Kombinationen davon, wobei die freien Fettsäuren, Fettsäureester, Glyceride und Phospholipide eine oder mehrere Fettsäuren oder Reste davon ausgewählt aus der Gruppe bestehend aus Eicosapentaen-, Docosahexaen-, Docosapentaen-, konjugierter Linol-, Palmitol-, trans-Palmitol-, alpha-Linol-, gamma-Linol- und Stearidonsäure und Kombinationen davon umfasst.

5. Kaubarer oraler Abgabeträger gemäß einem der Ansprüche 1 bis 4, wobei die oxidierbare Fettsäurezusammensetzung ferner ein fettlösliches Vitamin ausgewählt aus der Gruppe bestehend aus Vitamin A, Vitamin D, Vitamin K1, Vitamin K2 und Kombinationen davon umfasst.

6. Kaubarer oraler Abgabeträger gemäß einem der Ansprüche 1 bis 5, wobei die oxidierbare Fettsäurezusammensetzung ferner einen Viskositätsmodifikator und/oder einen Aromastoff umfasst.

7. Kaubarer oraler Abgabeträger gemäß einem der Ansprüche 1 bis 6, wobei die kaubare Matrix ein oder mehrere wasserlösliche Vitamine oder funktionelle Ergänzungsmittel umfasst.

8. Kaubarer oraler Abgabeträger gemäß einem der Ansprüche 1 bis 7, wobei die Weichgelatinekapsel ein Volumen von 0,12 ml bis 0,4 ml aufweist; oder wobei die Weichgelatinekapsel ein Volumen von 0,15 ml bis 0,25 ml aufweist.

9. Kaubarer oraler Abgabeträger gemäß einem der Ansprüche 1 bis 8, wobei die Weichgelatinekapsel von 100 mg bis 500 mg an der oxidierbaren Fettsäurezusammensetzung enthält; wobei die Weichgelatinekapsel beispielsweise von 120 mg bis 400 mg an der oxidierbaren Fettsäurezusammensetzung enthält; oder wobei die Weichgelatinekapsel von 150 mg bis 250 mg an der oxidierbaren Fettsäurezusammensetzung enthält.

10. Kaubarer oraler Abgabeträger gemäß einem der Ansprüche 1 bis 9, wobei die oxidierbare Fettsäurezusammensetzung ausgewählt ist aus der Gruppe bestehend aus einem Krillöl, Fischöl, Fischrogenöl und Fischnebenproduktöl.

11. Kaubarer oraler Abgabeträger gemäß Anspruch 10, wobei das Krillöl von 35 % bis 60 % Phospholipide auf Gew./Gew.-Basis; von 20 % bis 45 % Triglyceride auf Gew./Gew.-Basis; und von 50 bis 2500 mg/kg Astaxanthin umfasst.

12. Kaubarer oraler Abgabeträger gemäß Anspruch 11, wobei das Krillöl von 3 % bis 10 % Etherphospholipide auf Gew./Gew.-Basis umfasst, so dass die Gesamtmenge an Etherphospholipiden und Nichtether-Phospholipiden in der Zusammensetzung von 48 % bis 60 % auf Gew./Gew.-Basis beträgt.

13. Kaubarer oraler Abgabeträger gemäß Anspruch 11, wobei das Krillöl von 25 % bis 30 % Omega-3-Fettsäuren als prozentuellen Anteil der gesamten Fettsäuren umfasst und wobei von 80 % bis 90 % der Omega-3-Fettsäuren an die Phospholipide gebunden sind.

14. Kaubarer oraler Abgabeträger gemäß einem der Ansprüche 11 bis 13, wobei das Krillöl von 100 bis 2500 mg/kg Astaxanthin umfasst.

15. Kaubarer oraler Abgabeträger gemäß einem der Ansprüche 11 bis 14, wobei das Krillöl von 1 Gew./Gew.-% bis 10 Gew./Gew.-% Etherphospholipide; von 27 Gew./Gew.-% bis 50 Gew./Gew.-% Nichtether-Phospholipide, so dass die Menge der gesamten Phospholipide in der Zusammensetzung von 30 Gew./Gew.-% bis 60 Gew./Gew.-% beträgt; von 20 Gew./Gew.-% bis 50 Gew./Gew.-% Triglyceride; von 100 bis 2500 mg/kg Astaxanthin; und von 20 % bis 35 % Omega-3-Fettsäuren als prozentuellen Anteil der gesamten Fettsäuren in der Zusammensetzung umfasst, wobei von 70 % bis 95 % der Omega-3-Fettsäuren an die Phospholipide gebunden sind.

16. Kaubarer oraler Abgabeträger gemäß einem der Ansprüche 1 bis 15 zur Verwendung als Medikament bei einem therapeutischen Verfahren zur Bereitstellung einer oxidierbaren Fettsäurezusammensetzung an ein Subjekt, umfassend die orale Verabreichung des oralen Abgabeträgers gemäß einem der Ansprüche 1 bis 15 an ein Subjekt.

## Revendications

1. Véhicule à mâcher pour une administration orale, comprenant une matrice à mâcher et au moins une capsule de gélatine molle encapsulant une composition d'acides gras oxydable, dans lequel ladite au moins une capsule de gélatine molle est incorporée dans ladite matrice à mâcher, et où ladite capsule de gélatine molle possède un volume allant de 0,10 ml à 0,50 ml.

2. Véhicule à mâcher pour une administration orale selon la revendication 1, dans lequel ladite matrice à mâcher est une matrice de gel édulcorée telle qu'un bonbon gommeux ou un bonbon gélifié.

3. Véhicule à mâcher pour une administration orale selon la revendication 1 ou 2, dans lequel plus d'une capsule de gélatine molle est incorporée dans ladite matrice à mâcher.

4. Véhicule à mâcher pour une administration orale selon la revendication 1, dans lequel la composition d'acides gras oxydable est choisie dans le groupe constitué par les compositions d'acides gras libres, les compositions d'esters d'acides gras, les compositions de glycérides, les compositions de phospholipides et des combinaisons de celles-ci, lesdits acides gras libres, esters d'acides gras, glycérides, et phospholipides comprenant un ou plusieurs acides gras ou résidus de ceux-ci choisis dans le groupe constitué par l'acide éicosapentaénoïque, docosahexaénoïque, docosapentaénoïque, linoléique conjugué, palmitoléique, transpalmitoléique, alpha-linolénique, gamma-linolénique, et stéaridonique, et des combinaisons de ceux-ci.

5. Véhicule à mâcher pour une administration orale selon l'une quelconque des revendications 1 à 4, dans lequel ladite composition d'acides gras oxydable comprend en outre une vitamine liposoluble choisie dans le groupe constitué par la vitamine A, la vitamine D, la vitamine K1, la vitamine K2, et des combinaisons de celles-ci.

6. Véhicule à mâcher pour une administration orale selon l'une quelconque des revendications 1 à 5, dans lequel ladite composition d'acides gras oxydable comprend en outre un agent de modification de viscosité et/ou un agent aromatisant.

7. Véhicule à mâcher pour une administration orale selon l'une quelconque des revendications 1 à 6, dans lequel ladite matrice à mâcher comprend un(e) ou plusieurs vitamines hydrosolubles ou agents complémentaires fonctionnels.

8. Véhicule à mâcher pour une administration orale selon l'une quelconque des revendications 1 à 7, dans lequel ladite capsule de gélatine molle possède un volume allant de 0,12 ml à 0,4 ml ; ou où ladite capsule de gélatine molle possède un volume allant de 0,15 ml à 0,25 ml.

9. Véhicule à mâcher pour une administration orale selon l'une quelconque des revendications 1 à 8, dans lequel ladite capsule de gélatine molle contient de 100 mg à 500 mg de ladite composition d'acides gras oxydable ; par exemple, où ladite capsule de gélatine molle contient de 120 mg à 400 mg de ladite composition d'acides gras oxydable ; ou où ladite capsule de gélatine molle contient de 150 mg à 250 mg de ladite composition d'acides gras oxydable.

10. Véhicule à mâcher pour une administration orale selon l'une quelconque des revendications 1 à 9, dans lequel ladite composition d'acides gras oxydable est choisie dans le groupe constitué par une huile de krill, une huile de poisson, une huile d'œufs de poisson, ou une huile de sous-produit de poisson.

11. Véhicule à mâcher pour une administration orale selon la revendication 10, dans lequel ladite huile de krill comprend de 35% à 60% de phospholipides sur une base de p/p ; de 20% à 45% de triglycérides sur une base de p/p ; et de 50 à 2500 mg/kg d'astaxanthine.

12. Véhicule à mâcher pour une administration orale selon la revendication 11, dans lequel ladite huile de krill comprend de 3% à 10% de phospholipides éthers sur une base de p/p, de sorte que la quantité totale de phospholipides éthers et de phospholipides autres qu'éthers dans la composition aille de 48% à 60% sur une base de p/p.

13. Véhicule à mâcher pour une administration orale selon la revendication 11, dans lequel ladite huile de krill comprend de 25% à 30% d'acides gras oméga-3 comme pourcentage des acides gras totaux et où de 80% à 90% desdits acides gras oméga-3 sont fixés auxdits phospholipides.

14. Véhicule à mâcher pour une administration orale selon l'une quelconque des revendications 11 à 13, dans lequel ladite huile de krill comprend de 100 à 2500 mg/kg d'astaxanthine.

15. Véhicule à mâcher pour une administration orale selon l'une quelconque des revendications 11 à 14, dans lequel ladite huile de krill comprend de 1% à 10% p/p de phospholipides éthers ; de 27% à 50% p/p de phospholipides autres qu'éthers, de sorte que la quantité de phospholipides totaux dans la composition aille de 30% à 60% p/p ; de 20% à 50% p/p de triglycérides ; de 100 à 2500 mg/kg d'astaxanthine ; et de 20% à 35% d'acides gras oméga-3 comme pourcentage d'acides gras totaux dans ladite composition, où de 70% à 95% desdits acides gras oméga-3 sont fixés auxdits phospholipides.

16. Véhicule à mâcher pour une administration orale selon l'une quelconque des revendications 1 à 15, pour une utilisation comme médicament dans une méthode thérapeutique de mise à disposition d'une composition d'acides gras oxydable à un sujet, comprenant l'administration par voie orale du véhicule d'administration orale selon l'une quelconque des revendications 1 à 15 à un sujet.
